# EUROPEAN PATENT SPECIFICATION

(11) **EP 1 071 998 B1**
(45) Date of publication and mention of the grant of the patent: **07.04.2004**
(21) Application number: 97951747.1
(22) Date of filing: 18.12.1997
(51) Int. Cl.: G06F 13/42

(54) **HIGH SPEED DATA BUS DRIVER**
Daten-Bustreiber hoher Geschwindigkeit
UNITE D'ENTRAINEMENT DE BUS DE DONNEES A HAUTE VITESSE

(43) Date of publication of application: 31.01.2001
(73) Proprietor: THOMSON CONSUMER ELECTRONICS, INC., Indianapolis, IN 46290-1024 (US)
(72) Inventor: TULTS, Juri, Indianapolis, IN 46226 (US); TESTIN, William, John, Indianapolis, IN 46236 (US)
(74) Representative: Schäferjohann, Volker Willi, Dipl.-Phys.
(86) International application number: PCT/US1997/023364
(87) International publication number: WO 1999/031598

(56) References cited:
- EP-A- 0 359 233
- GB-A- 2 252 432
- US-A- 5 513 334
- US-A- 5 657 482

## Description

### FIELD OF THE INVENTION

The present invention involves digital data bus systems.

### BACKGROUND

Systems such as consumer electronics systems typically include various devices, such as integrated circuits, that are coupled together using a data bus for communicating information between the devices. An example of this type of system is a television receiver which includes an I²C serial data bus for communicating tuning data from a control microprocessor to a tuner causing the tuner to tune a particular channel. An I²C data bus is a well known serial data bus comprising two bus lines, a clock line designated SCL and a serial data line designated SDA, that carry information between devices connected to the bus. Each device is assigned a unique address permitting communications on the bus to be directed to a particular device. Each device can transmit data, receive data, or both as required by the function of the device. In addition to transmitting and receiving data, each device can also function as a master or slave when performing data transfers. A master is the device which initiates a data transfer on the bus and generates the clock signals to permit that transfer. At that time, any device addressed is considered a slave.

The I²C bus is a multi-master bus, meaning that more than one device is capable of controlling the bus. Masters are usually control devices such as microprocessors, microcomputers, or microcontrollers (also referred to herein as "controllers"). The possibility of connecting more than one microcontroller to the bus means that more than one master can try to initiate a data transfer at the same time on the bus. A procedure known as arbitration favorably resolves such an event. Arbitration relies on the wired-AND connection of all I²C interfaces to the bus. Should two or more masters try to place information on the bus, the first one to produce a logic one when the other produces a logic zero will lose the arbitration. The clock signals during arbitration are a synchronized combination of the clocks generated by the masters using the wired-AND connection to the SCL line. The specification for the I²C bus protocol specifies that the output stages of devices connected to the bus are to have an open-drain or open-collector in order to perform the wired-AND function. Consequently, pull-up of the bus lines is usually accomplished through pull-up resistors connected between the bus lines and a source of supply voltage.

Generation of clock signals on the I²C bus is always the responsibility of the master devices. Each master generates its own clock signal when transferring data on the bus. Data is only valid during the logic high period of the clock. Bus clock signals from a master can only be altered by another master when arbitration occurs or when the clock signals are stretched by a slow-slave device holding down the clock line. For example, every byte of information put on the SDA line (i.e., 8 bits of information) must be followed by an acknowledge bit. An acknowledge-related clock pulse is generated by the master. During the acknowledge clock pulse, the transmitter releases the SDA line and the receiver must pull down the SDA line. A receiving device can delay receipt of another byte of data, e.g., until it has performed some other function such as servicing an interrupt, by holding the SCL clock line low which will force the transmitting device into a wait state. U.S. Patent 4,689,740 issued to Adrianus P. M. M. Moelands and Herman Schutte details the operation of the I²C bus and protocol.

### SUMMARY OF THE INVENTION

The invention resides, in part, in recognizing that while the relative simplicity and availability of numerous compatible devices make a bus protocol such as I²C desirable, the form of bus driver associated with the bus protocol may not be adequate for certain applications. For example, bus drivers used with an I²C bus system typically use an open collector (or drain) device with a pull-up resistor coupled between the bus line and a source of reference voltage. Capacitive loading of a bus line combined with the resistance of a pull-up resistor may significantly degrade the speed at which a bus line can be pulled up. Further, capacitive loading increases with the number of devices coupled to the bus. This can pose a problem for applications that require high speed and involve high capacitive loads such as during production testing of a device incorporating bus driver capability (note that the term "device" as used herein includes integrated circuits and apparatus such as television receivers). Furthermore, the master has numerous other tasks to perform besides communicating with the slave devices. Therefore, a need exists for a bus driver suitable for driving buses such as an I²C bus with large loads at high speed to perform the communication between master and slave devices as fast as possible.

In addition, the inventor has recognized that utilizing a modified form of bus driver that can drive large loads at high speeds may be incompatible with existing bus compatible devices. In particular, existing I²C compatible devices are designed with current sinking capability sufficient only to pull down a bus line held high by a pull-up resistor (e.g., during an acknowledge interval or to cause a wait state). Such current sinking capability may be inadequate to pull down a bus line driven by a high speed driver circuit.

Also, the inventor has recognized that while it may be desirable to communicate data at high data rates across a heavily loaded bus, doing so may produce undesirable noise effects. Driving data across a data bus at high data rates involves using fast signal edges that have high frequency harmonic components. For example, in a television system, these high frequency harmonics can introduce noise into the video signal processing channel and may cause undesirable noise effects in a displayed video image.

These and other objects are solved by virtue of the teachings disclosed in independent claims 1 and 9.

The invention also resides, in part, in providing an apparatus for coupling data to a data bus that solves the described problems. More specifically, apparatus constructed in accordance with one aspect of the invention comprises a data bus, a passive pull up device for changing a signal on the data bus between first and second states at a first rate during a first mode of operation, and an active push-pull device enabled during a second mode of operation for changing the signal between the first and second states at a second rate different than the first rate. The second mode of operation may correspond to a particular condition of the bus such as an acknowledge condition or a data read condition.

Information generated by a device is coupled to an I2C data bus via a push-pull device. During the first mode of operation, the push-pull device couples information to the I2C data bus at a first rate.

During the second mode of operation, the push-pull device couples information to the I2C data bus at a second rate.

In accordance with another aspect of the invention, the apparatus comprises a coupling device for coupling data to a data bus and a timing signal generator for generating a timing signal indicating first and second portions of a television signal. The coupling device is controlled by a control device in response to the timing signal such that the coupling device couples data to the data bus at a first rate during the first portion of the television signal and couples data to the data bus at a second rate during the second portion of the television signal.

The first portion of the television signal may comprise an active video interval while the second portion of the television signal may comprise a blanking interval. The first rate at which data is coupled to the data bus may be less than the second rate at which data is coupled to the data bus. A push-pull device included in the coupling device can be disabled during the first portion of the television signal and enabled for driving data onto the data bus at the second rate during the second portion of the television signal.

### BRIEF DESCRIPTION OF THE DRAWING

The invention may be better understood by referring to the drawing in which:
Figure 1 shows, in schematic diagram form, an arrangement of master and slave devices communicating via a data bus;
Figures 2A-2D show timing diagrams illustrating the operation of the system shown in Figure 1;
Figure 3 shows, in schematic diagram form, an embodiment of a data bus communication system for communicating data between master and slave devices in accordance with the present invention;
Figure 4 shows, in schematic diagram form, an embodiment of a portion of the system shown in Figure 3; and
Figures 5A-5D show timing diagrams illustrating the operation of the system shown in Figure 3.

### DETAILED DESCRIPTION

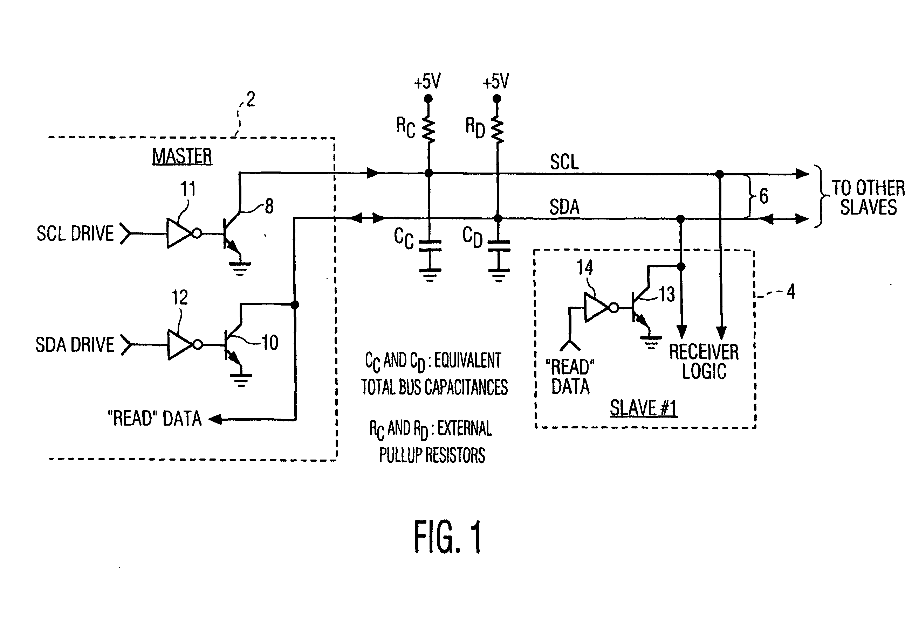

In a conventional data bus system such as the I²C bus system shown in Figure 1, master device 2 is connected to slave device 4 (designated Slave #1) by I²C bus 6. In accordance with I²C bus conventions, the labels SDA and SCL are used to identify the serial data line and the clock line, respectively, in I²C bus embodiments described herein and shown in the accompanying Figures. Master device 2 comprises a driver for driving each bus line. More specifically, bus lines SCL and SDA in Figure 1 are driven using NPN bipolar transistors 8 and 10, respectively, connected thereto.

The base of each transistor, 8 and 10, is connected to an output of a respective one of inverters 11, 12. A respective drive signal, SCL DRIVE and SDA DRIVE, is coupled to the input of a corresponding inverter 11, 12. When SCL DRIVE or SDA DRIVE signals are at a logic high level, the respective NPN transistors 8 or 10 do not turn on causing lines SCL and SDA to be pulled to a high level, e.g., to 5 volts in Figure 1, via pull-up resistors R_{C} and R_{D}, respectively. When SCL DRIVE or SDA DRIVE signals are at a logic low level, the respective NPN transistors 8 or 10 turn on to pull their respective bus lines down to a low level, e.g., circuit ground in Figure 1.

Slave device 4 includes a pull-down device, implemented in Figure 1 as NPN bipolar transistor 13 having a base terminal that is connected to the output of inverter 14. Transistor 13 pulls down the SDA line upon receipt of a logic high signal at its base. The input of inverter 14 is coupled to receive signal "Read data". Pull-down of the SDA line by transistor 13 occurs when data is being read out from slave device 4, e.g., "Read data" input is switched between high and low. Data received by slave device 4 from the SCL and SDA bus lines is coupled to receiver logic that processes the data.

The SCL line pull-up resistor is designated R_{C} and the SDA line pull-up resistor is designated R_{D} . Each pull-up resistor is shown connected at one end to an exemplary 5 volt supply voltage and to a respective capacitor, C_{C} or C_{D}, representative of the lumped equivalent capacitances of a respective bus line. The SDA and SCL bus lines are also connected to other slave devices as indicated in Figure 1. The SDA line is bi-directional while the SCL line is an output only from the master device generating the clock signal, i.e., device 2 in Figure 1.

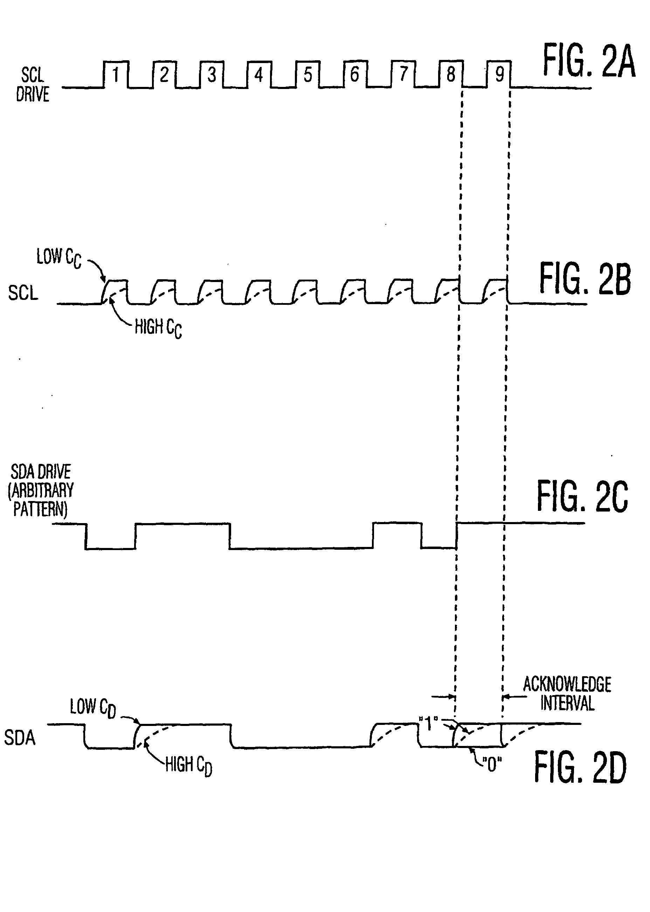

Figures 2A-2D illustrate relative timing diagrams of the SCL DRIVE signal, the signal present on the SCL line, the SDA DRIVE signal and the signal present on the SDA line, respectively. The SCL DRIVE and SDA DRIVE signals are the driving signals coupled to the SCL and SDA bus lines, respectively, by a coupling device such as bus driver devices 8, 11 and 10, 12 in Figure 1. A nine bit transmission, including an acknowledge bit, is illustrated in Figures 2A-2D by the waveforms for signals SCL DRIVE, SCL, SDA DRIVE and SDA. A solid-line portion of the waveform for signal SCL is labeled "low C_{C}" and shows the signal waveform on the SCL line resulting from low capacitance loading on the SCL line. The dashed portion of the SCL waveform, labeled "high C_{C}", indicates the signal waveform on the SCL line resulting from a high capacitance load on the SCL line. Similarly illustrated is a low capacitance loaded SDA line (the solid line portion of the SDA waveform is labeled "low C_{D}") and a high capacitance loaded SDA line (the dashed line portion of the SDA waveform is designated "high C_{D}"). The data state (logic 0 and 1) during the acknowledge interval (signified by generation of the acknowledge clock pulse by the master, release of the SDA line by the transmitter and pull-down of the SDA line by the receiver during the acknowledge clock pulse) is also illustrated in Figures 2A-2D.

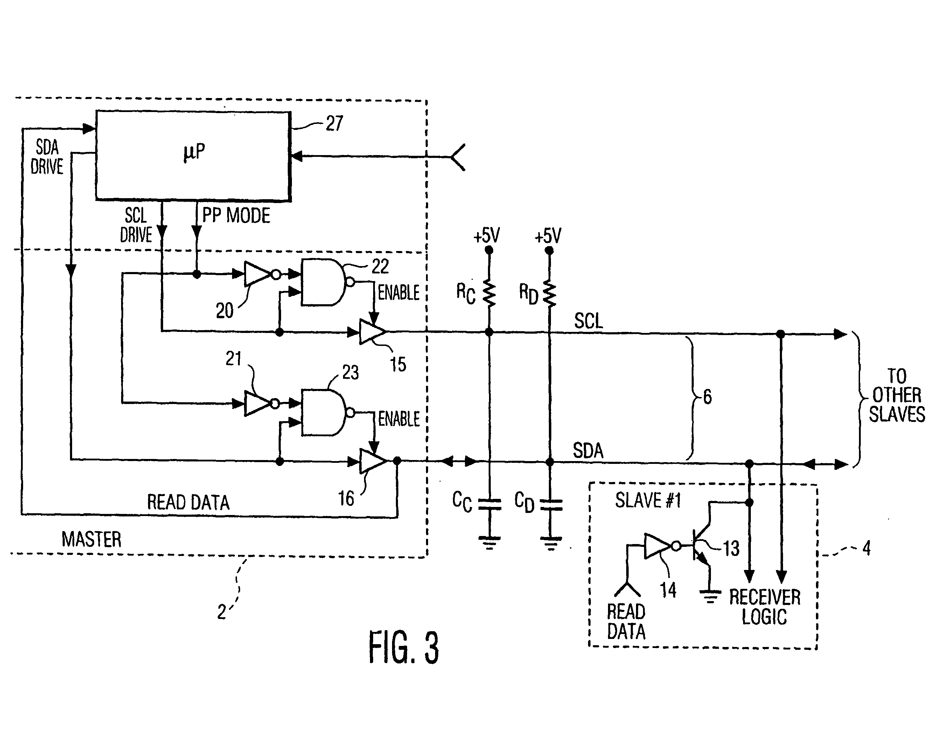

Figure 3 illustrates the apparatus for driving a data bus in accordance with principles of the present invention. To provide for higher data rates on heavily loaded bus lines, for example, to allow for high speed production testing, Figure 3 illustrates a system for decreasing slow rise times associated with high capacitance loading on a bus line. In particular, the bus driver within master device 2 includes buffer devices 15 and 16 which provide active pull-up and pull-down of the bus lines. More specifically, tri-state buffers 15 and 16 drive respective bus lines SCL and SDA in a high speed mode which shall be referred to as a push-pull mode. Operation of the bus in the conventional manner (e.g., in a low speed mode via the passive pull-up resistors) is still possible. However, in the push-pull mode, the tri-state buffers 15 and 16 are always in an active state and the bus lines are driven to a logic high level much faster, in comparison with the conventional mode, through the relatively large source currents furnished by the tri-state buffers.

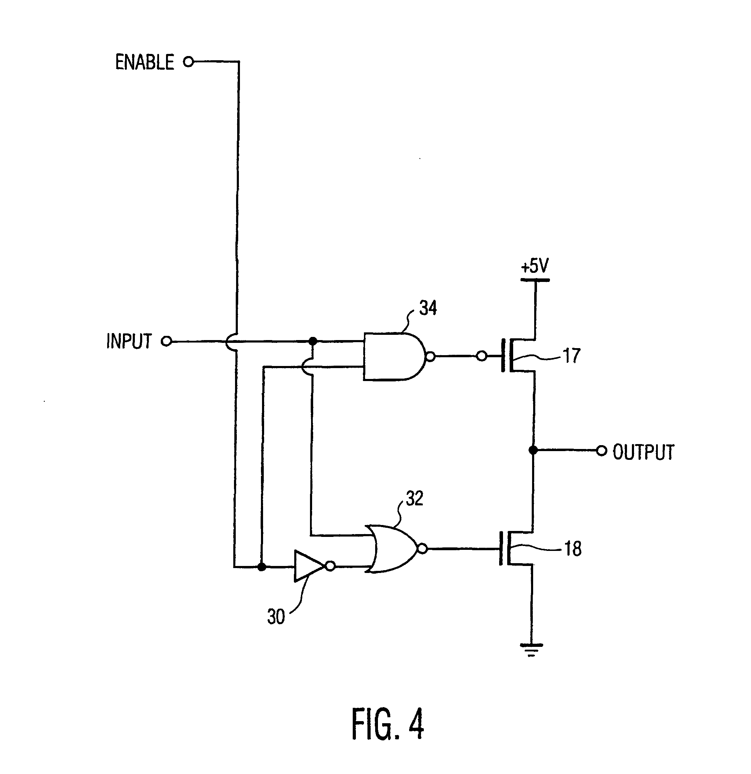

Tri-state buffers such as buffers 15 and 16 in Figure 3 can be implemented as shown in Figure 4. Although Figure 4 shows an embodiment using field effect transistors, various technologies including bipolar and field effect transistors can be used to implement the drivers shown. In Figure 4, the drain terminals of PMOS transistor 17 and NMOS transistor 18 are coupled together. The source terminal of transistor 17 is coupled to a supply voltage, e.g., 5 V, and the source terminal of transistor 18 is coupled to a reference potential, e.g., ground. The gate terminal of transistor 17 is coupled to the output of NAND gate 34 which has as inputs signal INPUT which is the data that is to be driven onto the bus, and signal ENABLE. The gate terminal of transistor 18 is coupled to the output of NOR gate 32 which has as inputs signal INPUT and an inverted version of signal ENABLE (inverted via inverter 30). When signal ENABLE is high (at logic 1), the buffer is enabled for transmitting data. Specifically, when enabled, logic 0 values on signal INPUT are passed through NOR gate 32 and transistor 18 onto the bus (signal OUTPUT) while logic 1 values on signal INPUT are passed through NAND gate 34 and transistor 17 onto the bus.

Returning to Figure 3, signal PP MODE (push-pull mode) is generated by a microprocessor 27. The microprocessor 27 decides whether to generate either a high or low logic level PP mode signal which determines whether the master 2 is operating in a push-pull or normal mode. Signal PP MODE is coupled to one input of NAND gate 22 via inverter 20. Signal SCL DRIVE is also generated by microprocessor 27 and coupled to the other input of NAND gate 22. The output of NAND gate 22 provides the ENABLE signal for tri-state buffer 15 such that buffer 15 is always enabled when signal PP MODE is at a logic high level. The SCL bus line is pulled up to a logic high level by the active device in tri-state buffer 15 in connection with a logic high SCL DRIVE signal while tri-state buffer 15 is enabled, a first state. The SCL bus line is pulled down to a logic low level by tri-state buffer 15 in connection with a logic low SCL DRIVE signal while tri-state buffer 15 is enabled, a second state. Tri state buffer 15 is always enabled to drive the SCL bus line and change line SCL between the first and second signal states (high and low logic levels) when signal PP MODE is at a logic high level.

In order to use the push-pull mode for achieving a logic high level on bus line SDA, the master 2 must not be either reading data from the addressed slave or generating an SCL clock pulse for the acknowledge bit generated by the slave. Signal PP MODE is also coupled to one input of NAND gate 23 via inverter 21. Signal SDA DRIVE is also generated by microprocessor 27 and coupled to the other input of NAND gate 23. The output of NAND gate 23 provides the enable signal for tri-state buffer 16 such that buffer 16 is always enabled when signal PP MODE is at a logic high level. The SDA bus line is pulled up to a logic high level by the active device included in tri-state buffer 16 in connection with a logic high SDA DRIVE signal while SDA bus line is pulled down to a logic low level by tri-state buffer 16 in connection with a logic low SDA DRIVE signal while tri-state buffer 16 is enabled.

When the master 2 is in a read cycle or during an acknowledge interval the microprocessor 27 will generate a logic low PP MODE signal and the buffers 15 and 16 will be disabled when the SCL and SDA DRIVE signals, respectively, are at a logic high level. In this instance the SCL and SDA buses are operating in a normal mode pulled high by the external resistors R_{C} and R_{D}, respectively. During these times the microprocessor 27 will generate a logic low level PP MODE signal. Thus, in normal operation, signal PP MODE is a logic low control bit and the tri-state buffers driving the I²C bus are in a high output impedance state during intervals when the SCL DRIVE and SDA DRIVE signals are at a logic high level. In other words, the push-pull mode is turned off when SCL DRIVE and SDA DRIVE are at logic "1". The logic high level on the bus lines is established through pull-up resistors R_{C} and R_{D} when signal PP MODE is at logic "0". That is, the passive pull up resistors change the signals on the bus lines between the first and second states (logic low and high levels) at a rate determined by the pull up resistor value and the capacitive loading on the bus lines.

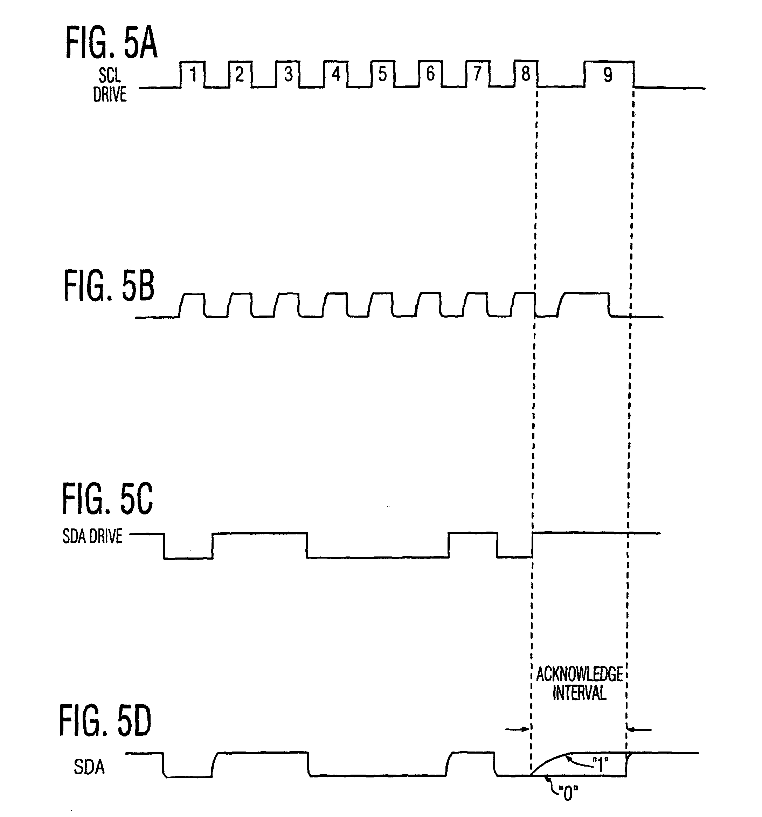

Figures 5A-5D illustrate the relative timing diagrams of selected signals on the bus illustrated in Figure 3. Now the wave form shapes associated with the push-pull mode all follow the low capacitive loaded form indicated by the solid line. Note that the push-pull mode of master cell device 2 must be suspended while master 2 is reading data supplied by a slave cell 4. This is necessary because in general the slaves on the bus cannot be expected to have push-pull bus drive capability. In fact, note that the acknowledge interval shown in Figures 2A-2D are the result of slave device 4 either releasing or holding low the SDA bus line. When the slave devices return data, the master must have released the SDA bus line so that this bus line can be pulled low by a slave. Further, the SCL bus clock must be slowed down during the read period to allow for the slow rise time of the returned data signal on the SDA bus.

As shown in Figures 5A-5D, during the acknowledge interval corresponding to the 9th SCL clock cycle in which the addressed slave device returns a bit of data to the master, the master is switched from push-pull to normal drive. The clock period is shown to be increased arbitrarily by a factor of 2 in the acknowledge interval. Control of the clock period is provided by software executed by microprocessor 27. When the slave is returning either read data or an acknowledge bit (either a logic high or logic low during the ninth clock pulse) the slave is placing data on the bus by pulling down the SDA bus line or by allowing pulling up the SDA bus line by the pull-up resistor. The purpose of increasing the clock period of the pulse on the SCL bus line when the slave is returning data is to accommodate the fact that the slave is not able to operate in the push-pull mode. A purely slave device ( defined herein as a slave that does not have provision for acting as a master) never pulls up the bus by a push-pull mode. However, note that as another embodiment of the invention, it is possible to implement bus control through push-pull mode using a master acting as a slave.

Although the invention has been described in detail herein with reference to its preferred embodiment, it is to be understood that this description is by way of example only and it is not to be construed in a limiting sense. It is to be further understood that numerous changes in the details of the embodiments of the invention, and additional embodiments of the invention, will be apparent to, and may be made by persons of ordinary skill in the art having reference to this description. For example, although described with regard to an embodiment incorporating a data bus according to the I²C protocol, the invention is applicable to other data bus protocols incorporating either serial or parallel data communication. An example of another data bus protocol for which the invention may be useful is the IM data bus protocol supported by ITT.

Also, although conventional slave devices do not include push-pull mode operation, purely slave devices may be manufactured by device makers, in consideration of the invention disclosed herein, which incorporate the tri-state buffer as is similarly included in the master device as discussed above. In addition, although specific logic control signal polarities and circuit implementations have been described, it will be appreciated by those of ordinary skill in the art that modifications can be made to the structure and function of the invention as claimed below.

## Claims

1. Apparatus for controlling data transmission on a data bus, said apparatus comprising:
a passive pull up device (R_{C}, R_{D}) coupled to the data bus (6) for establishing a first operating mode during which data signals are transmitted on the data bus (6) at a first rate; and
an active push-pull device (15, 16) coupled to the data bus (6) and capable of operating in one of an enabled mode and a disabled mode, said active device (15, 16) in said enabled mode establishing a second operating mode during which signals are transmitted on the data bus at a second rate, said first rate being different from said second rate.

2. Apparatus according to claim 1, wherein said data bus (6) is an I²C data bus.

3. Apparatus according to claim 2, wherein said passive pull up device (R_{C}, R_{D}) includes a pull-up resistor for coupling a bus line included in said data bus to a source of supply voltage.

4. Apparatus according to claim 3, wherein the data is transmitted between a master device (2) and slave device (4) and said active push-pull device (15, 16) couples the master device, (2) to the data bus (6).

5. Apparatus according to one of claims 1 to 4, wherein said active push-pull device (15, 16) is placed in said disabled mode during said first mode of operation thereby preventing said active push-pull device (15, 16) from affecting said first rate.

6. Apparatus according to claim 5, wherein said passive pull-up device (R_{C}, R_{D}) is operative during said first and second modes of operation for switching the data signal on the data bus between a logic high and a logic low state.

7. Apparatus according to claim 5 or 6, wherein the data is transmitted between a master device (2) and a slave device (4), said active push-pull device (15, 16) couples the master device (2) to the data bus (6) and said first operating mode corresponds to one of an acknowledge condition or a data read condition during which one of the slave devices (4) communicates information to the master device (2).

8. Apparatus according to claim 7, wherein said data bus (6) is an I²C data bus.

9. Television signal processing system including an apparatus for controlling data transmission on a data bus (6), said apparatus comprising:
a passive pull up device (R_{C}, R_{D}) coupled to the data bus (6) for establishing a first operating mode during which data signals are transmitted on the data bus (6) at a first rate; and
an active push-pull device (15, 16) coupled to the data bus (6) and capable of operating in an enabled mode and a disabled mode, said active push-pull device (15, 16) in said enabled mode establishing a second operating mode during which signals are transmitted on the data bus (6) at a second rate, said first rate being different from said second rate, wherein said first operating mode occurs during an interval corresponding to a first portion of a television signal representing video information and said second operating mode occurs during an interval corresponding to a second portion of the television signal representing information other than video information.

10. Television signal processing system according to claim 9, wherein said data bus (6) is an I²C data bus, the data is transmitted between a master device (2) and a slave device (4), said active push-pull device (15, 16) couples the master device (2) to the data bus (6), said active push-pull device (15, 16) being placed in said disabled mode during said first operating mode thereby preventing said active push-pull device (15, 16) from affecting said first rate, and said first operating mode corresponds to one of an acknowledge condition or a data read condition during which one of the slave devices (4) communicates information to the master device (2).

## Patentansprüche

1. Vorrichtung zur Steuerung der Datenübertragung auf einem Daten-Bus, umfassend:
eine passive Pull-up-Vorrichtung (R_{C}, R_{D}), die mit dem Daten-Bus (6) verbunden ist, um eine erste Betriebsart zu errichten, während der Datensignale auf dem Daten-Bus (6) mit einer ersten Rate übertragen werden; und
eine aktive Gegentakt-Vorrichtung (15, 16), die mit dem Daten-Bus (6) verbunden und in der Lage ist, in einer wirksamen oder einer unwirksamen Weise zu arbeiten, wobei die aktive Vorrichtung (15, 16) in der wirksamen Weise eine zweite Betriebsart errichtet, während der Signale auf dem Daten-Bus mit einer zweiten Rate übertragen werden, wobei die erste Rate sich von der zweiten Rate unterscheidet.

2. Vorrichtung nach Anspruch 1, bei der der Daten-Bus (6) ein I²C-Daten-Bus ist.

3. Vorrichtung nach Anspruch 2, bei der die passive Pull-up-Vorrichtung (R_{C}, R_{D}) einen Pull-up-Widerstand enthält, um eine in dem Daten-Bus enthaltene Bus-Leitung mit einer Versorgungs-Spannungsquelle zu verbinden.

4. Vorrichtung nach Anspruch 3, bei der die Daten zwischen einer Master-Vorrichtung (2) und einer Slave-Vorrichtung (4) übertragen werden und die aktive Gegentakt-Vorrichtung (15, 16) die Master-Vorrichtung (2) mit dem Daten-Bus (6) verbindet.

5. Vorrichtung nach einem der Ansprüche 1 bis 4, bei der die aktive Gegentakt-Vorrichtung (15, 16) in die unwirksame Weise während der ersten Betriebsart gebracht wird, um dadurch zu verhindern, dass die aktive Gegentakt-Vorrichtung (15, 16) die erste Rate beeinträchtigt.

6. Vorrichtung nach Anspruch 5, bei der die passive Pull-up-Vorrichtung (R_{C}, R_{D}) während der ersten und zweiten Arbeitsweise wirksam ist, um das Datensignal auf dem Daten-Bus zwischen einem logisch hohen Zustand und einem logisch niedrigen Zustand umzuschalten.

7. Vorrichtung nach Anspruch 5 oder 6, bei der die Daten zwischen einer Master-Vorrichtung (2) und einer Slave-Vorrichtung (4) übertragen werden, wobei die aktive Gegentakt-Vorrichtung (15, 16) die Master-Vorrichtung (2) mit dem Daten-Bus (6) verbindet und die erste Betriebsart einem Bestätigungs-Zustand oder einem Daten-Lese-Zustand entspricht, während dem eine der Slave-Vorrichtungen (4) Informationen zu der Master-Vorrichtung (2) überträgt.

8. Vorrichtung nach Anspruch 7, bei der der Daten-Bus ein I²C-Daten-Bus ist.

9. Fernsehsignal-Verarbeitungssystem mit einer Vorrichtung zur Steuerung der Datenübertragung auf einem Daten-Bus (6), wobei die Vorrichtung umfasst:
Eine passive Pull-up-Vorrichtung (R_{C}, R_{D}), die mit dem Daten-Bus verbunden ist, um eine erste Betriebsart zu errichten, während der Datensignale auf dem Daten-Bus (6) richten, während der Datensignale auf dem Daten-Bus (6) mit einer ersten Rate übertragen werden; und
eine aktive Gegentakt-Vorrichtung (15, 16), die mit dem Daten-Bus (6) verbunden ist und in einer wirksamen Weise und in einer unwirksamen Weise arbeiten kann, wobei die aktive Gegentakt-Vorrichtung (15, 16), in der wirksamen Weise eine zweite Betriebsart errichtet, während der Signale auf dem Daten-Bus (6) mit einer zweiten Rate übertragen werden, wobei die erste Rate sich von der zweiten Rate unterscheidet, wobei die erste Betriebsart während eines Zeitintervalls auftritt, das einem ersten Teil eines Fernsehsignals entspricht, das Video-Informationen darstellt, und die zweite Betriebsart während eines Intervalls auftritt, die einem zweiten Teil des Fernsehsignals entspricht, das andere Informationen als die Video-Informationen darstellt.

10. Fernsehsignal-Verarbeitungssystem nach Anspruch 9, bei dem der Daten-Bus (6) ein I²C-Daten-Bus ist und die Daten zwischen einer Master-Vorrichtung (2) und einer Slave-Vorrichtung (4) übertragen werden, wobei die aktive Gegentakt-Vorrichtung (15, 16) die Master-Vorrichtung (2) mit dem Daten-Bus (6) verbindet, wobei die aktive Gegentakt-Vorrichtung in die unwirksame Weise während der ersten Betriebsart gebracht wird und dadurch die aktive Gegentakt-Vorrichtung (15, 16) daran hindert, die erste Rate zu beeinträchtigen, und wobei die erste Betriebsart einem Bestätigungs-Zustand oder einem Daten-Lese-Zustand entspricht, während dem eine der Slave-Vorrichtungen (4) Informationen zu der Master-Vorrichtung (2) überträgt.

## Revendications

1. Appareil pour le contrôle de la transmission de données sur un bus de données, ledit appareil, comprenant :
un dispositif de mise au niveau haut passif (R_{C}, R_{D}) couplé au bus de données (6) pour l'établissement d'un premier mode de fonctionnement pendant lequel les signaux de données sont transmis sur le bus de données (6) à un premier débit ; et
un dispositif push-pull actif (15, 16) couplé au bus de données (6) et capable de fonctionner en mode activé ou en mode désactivé, ledit dispositif actif (15, 16) dans ledit mode activé établissant un second mode de fonctionnement pendant lequel les signaux sont transmis sur le bus de données à un second débit, ledit premier débit étant différent dudit second débit.

2. Appareil selon la revendication 1, dans lequel ledit bus de données (6) est un bus de données I²C.

3. Appareil selon la revendication 2, dans lequel ledit dispositif de mise au niveau haut passif (R_{C}, R_{D}) inclut une résistance de rappel vers le niveau haut pour le couplage d'une ligne de bus incluse dans ledit bus de données à une source de tension d'alimentation.

4. Appareil selon la revendication 3, dans lequel les données sont transmises entre un dispositif maître (2) et un dispositif esclave (4) et ledit dispositif push-pull actif (15, 16) couple le dispositif maître (2) au bus de données (6).

5. Appareil selon l'une des revendications 1 à 4, dans lequel ledit dispositif push-pull actif (15, 16) est placé dans ledit mode désactivé pendant ledit premier mode de fonctionnement, empêchant ainsi ledit dispositif push-pull actif (15, 16) d'affecter ledit premier débit.

6. Appareil selon la revendication 5, dans lequel ledit dispositif de mise au niveau haut passif (R_{C}, R_{D}) est fonctionnel pendant lesdits premier et second modes de fonctionnement pour faire basculer le signal de données sur le bus de données entre un état logique haut et un état logique bas.

7. Appareil selon la revendication 5 ou 6, dans lequel les données sont transmises entre un dispositif maître (2) et un dispositif esclave (4), ledit dispositif push-pull actif (15, 16) couple le dispositif maître (2) au bus de données (6) et ledit premier mode de fonctionnement correspond soit à une condition d'acquittement soit à une condition de lecture de données pendant laquelle l'un des dispositifs esclave (4) communique des informations au dispositif maître (2).

8. Appareil selon la revendication 7, dans lequel ledit bus de donnée (6) est un bus de données I²C.

9. Système de traitement du signal de télévision incluant un appareil pour contrôler la transmission de données sur un bus de données (6), ledit appareil comprenant :
un dispositif de mise au niveau haut passif (R_{C}, R_{D}) couplé au bus de données (6) pour l'établissement d'un premier mode de fonctionnement pendant lequel les signaux de données sont transmis sur le bus de données (6) selon un premier débit ; et
un dispositif push-pull actif (15, 16) couplé au bus de données (6) et capable de fonctionner en mode activé ou en mode désactivé, ledit dispositif push-pull actif (15, 16) dans ledit mode activé établissant un second mode de fonctionnement pendant lequel les signaux sont transmis sur le bus de données (6) à un second débit, ledit premier débit étant différent dudit second débit, dans lequel ledit premier mode de fonctionnement intervient pendant un intervalle correspondant à une première portion d'un signal de télévision représentant des informations vidéo et ledit second mode de fonctionnement intervient pendant un intervalle correspondant à une seconde portion du signal de télévision représentant des informations autres que des informations vidéo.

10. Système de traitement du signal de télévision selon la revendication 9, dans lequel ledit bus de données (6) est un bus de données I²C, les données sont transmises entre un dispositif maître (2) et un dispositif esclave (4), ledit dispositif push-pull actif (15, 16) couple le dispositif maître (2) au bus de données (6), ledit dispositif push-pull actif (15, 16) étant placé dans ledit mode désactivé pendant ledit premier mode de fonctionnement, empêchant ainsi ledit dispositif push-pull actif (15, 16) d'affecter ledit premier débit, et ledit premier mode de fonctionnement correspond soit à une condition d'acquittement soit à une condition de lecture de données pendant laquelle l'un des dispositifs esclave (4) communique des informations au dispositif maître (2).
